# EUROPEAN PATENT APPLICATION

(11) **EP 4 442 527 A1**
(43) Date of publication of application: **09.10.2024**
(21) Application number: 23461547.4
(22) Date of filing: 05.04.2023
(51) Int. Cl.: B60W 40/09, B60W 50/00, B60W 50/10

(54) **METHOD AND SYSTEM FOR PREDICTING DRIVERS' BEHAVIOUR ON THE ROAD BASED ON THEIR HABITS**

(71) Applicant: Uniwersytet Zielonogórski, 65-417 Zielona Góra (PL)
(72) Inventor: Paczkowski, Jacek, 67-100 Nowa Sol (PL); Ostrowski, Kacper, 65-533 Zielona Gora (PL); Kramek, Krzysztof, 65-124 Zielona Gora (PL); Mrugalski, Marcin, 65-128 Zielona Gora (PL)
(74) Representative: JD&P Patent Attorneys Joanna Dargiewicz & Partners

(57) **Abstract**

A method for predicting drivers' behaviour on the road based on their habits, which includes: (a) identifying the driver; (b) collecting information on the position of the hands and individual fingers on the steering wheel, especially before and during a manoeuvre; (c) collecting information on the position of the feet over or on the pedals, especially before and during a manoeuvre; (d) collecting information on the movement of the vehicle; (e) creating a local database for a given driver containing data on the position of the hands on the steering wheel, the position of the feet over or on the pedals and the manoeuvre performed simultaneously and/or within a few seconds; (f) establishing a correlation between hand position on the steering wheel, feet position over or on the pedals and the simultaneous and/or multi-second manoeuvre; (g) if this correlation exists, calculating the probability of execution of the manoeuvre; wherein in step (a) the driver is preferably identified by the camera and/or the settings of the driver's seat and/or the settings of the mirrors and/or the driving style, acceleration, speed of gear changing, use of the brake and/or the clutch, etc.; steps (b), (c) and (d) are performed simultaneously; steps (b) and (c) are preferably performed using capacitive sensors, pressure sensors or cameras; stage d) is preferably performed using motion sensors such as accelerometers and gyroscopes to determine what manoeuvre was performed and location systems such as GPS, Glonass, Galileo or Beidou to confirm the performed manoeuvre; steps f) and g) are performed using statistical analysis. The invention relates to a system implementing this method as well.

## Description

The subject matter of the present invention is a method and system for predicting drivers' driving behaviour based on their habits.

When driving, drivers unconsciously place their hands on the steering wheel in different ways depending on the manoeuvre they plan to perform (e.g. overtaking, turning, changing lanes, etc.). Similarly, before they use the pedal they place their foot over it. These individual driver behaviours are repeatable, which can be used to predict their next behaviour.

### State of the art

In the state of the art, there are many solutions for determining the state of the driver or predicting his/her driving behaviour.

CN106945670A describes a vehicle rollover prediction system based on sensor information (e.g. steering angle and forces on the vehicle).

CN104688252A describes a method for determining driver fatigue from steering wheel movements.

US2009319095A1 describes a method for predicting what will happen to a vehicle based on readings from sensors placed in the vehicle.

CN114103962A describes a system for the prediction of driver intentions based on the Brain-Vehicle interface. The system involves implanting electrodes into the driver's cerebral cortex. It is supposed to detect, for example, which muscles will move and how.

CN112373563A discloses a means of detecting that the steering wheel has been let go.

JPH05345569A discloses the method of detecting the start of a manoeuvre by measuring the force of the steering grip.

CN110329255A discloses how to determine whether a lane change is intentional.

CN112298176A discloses a method for predicting lane changes based on pressure sensors embedded in the steering wheel, camera images and past data. This is the closest solution to the present invention. This document proposes to use pressure sensors placed in two groups, right and left, to detect the hands on the steering wheel. In addition, a camera and a steering wheel twist sensor are used. The twisting of the driver's head, the position of the hands on the steering wheel (whether the hands are on the left side of the steering wheel or on the right side) are analysed. There is no information in the description to indicate the exact position of the hands on the steering wheel and the orientation of the hands (position of the thumbs).

CN114565969A discloses a method of detecting abnormal driver behaviour. The solution is based on different sensors and has different objectives, but there is some similarity with the present invention. This document describes a system for detecting abnormal driver behaviour using a neural network (artificial intelligence). Sensors for the position of the accelerator and brake pedals are used. However, it does not appear from the description that the system is used to signal the driver's intentions to other road users.

CN111461206A discloses a method of detecting driver fatigue using encephalograph electrodes embedded in the steering wheel.

US2017356350A1 discloses a way to assist the driver by detecting pedal position and previous driver behaviour.

JP2019018609A discloses a method of assisting braking by predicting the driver's intentions based on the time from removing the foot from the accelerator pedal to pressing the brake. This is close to the solution according to the present invention, in which, however, the approach of the foot to the pedal is also detected, rather than only the pressing of the pedal, and furthermore any slow braking is also detected in order to warn vehicles behind of the braking intention itself.

JP2015209851A discloses a method of controlling a drive train based on sensors in pedals. This solution is also similar to the solution described in this appendix, in which not only the touching or pressing of the pedal is detected, but also the approach of the foot to the pedal. Furthermore, the document only describes the use of pedal detection for drive control, while the present invention relates to signalling the driver's intentions to other drivers. The solution shown in this document does not make a prediction of the driver's behaviour, but only reacts to the driver's actions.

Thus, there is no solution in the field for comprehensively predicting driver behaviour on the basis of current reactions as well as previous events and signalling the detected intention to other road users.

The object of the present invention was to develop such a method and a system for implementing it.

Thus, the subject matter of the present invention is a method for predicting drivers' behaviour on the road of drivers based on their habits, which comprises: (a) identifying the driver; (b) collecting information about the position of the hands and individual fingers on the steering wheel, especially before and during the manoeuvre; (c) collecting information about the position of the feet over or on the pedals, especially before and during the manoeuvre; (d) collecting information about the movement of the vehicle; (e) creating a local database for a given driver containing data about the position of the hands on the steering wheel, the position of the feet over or on the pedals and the manoeuvre performed simultaneously and/or within a few seconds; (f) establishing a correlation between hand position on the steering wheel, feet position over or on the pedals and the simultaneous and/or multi-second manoeuvre; (g) if this correlation exists, calculating the probability of execution of the manoeuvre; wherein in step (a) the driver is preferably identified by the camera and/or the settings of the driver's seat and/or the settings of the mirrors and/or the driving style, acceleration, speed of gear changing, use of the brake and/or the clutch, etc.; in step (b), (c), (d), (e), (f), (g), (h) and (i).ln stage a), the driver is preferably identified using the driver's driving style, acceleration, speed of gear change, use of the brake and/or clutch, etc. ; steps b), c) and d) are performed simultaneously; steps b) and c) are preferably performed using capacitive sensors, pressure sensors or cameras; stage d) is preferably performed using motion sensors such as accelerometers and gyroscopes to determine what manoeuvre was performed and location systems such as GPS, Glonass, Galileo or Beidou to confirm the performed manoeuvre; steps f) and g) are performed using statistical analysis.

The developers of the present invention decided to place sensors in the steering wheel to detect where the driver's hands are on the wheel and which fingers are touching the wheel. For this purpose, capacitive sensors, pressure sensors or a camera placed above the steering wheel can be used. The same type of sensors can be used for the pedals.

It is necessary to collect information from sensors in the steering wheel and pedals, as well as from vehicle movement sensors such as accelerometers, gyroscopes and location systems (e.g. GPS, GLONASS, Galileo, Beidou).

Motion sensors and location systems tell you what manoeuvre has been made, while sensors in the steering wheel and pedals tell you what the driver was doing before and during the manoeuvre.

Further, it is necessary to find a correlation between the driver's behaviour recorded by the sensors in the steering wheel and pedals and the manoeuvre in question.

To this end, data relating to e.g. a left lane change should be grouped with information from the steering wheel and pedal sensors ranging from e.g. 3 seconds before the manoeuvre until the manoeuvre is completed. The resulting database should, after some time, be large enough to detect statistical anomalies, e.g. whether the driver always or almost always places his hands on the steering wheel in the same way BEFORE the manoeuvre or his feet over the pedals BEFORE the manoeuvre. If such regularities exist then they will be detected and can be used to predict what the driver will do in the next few seconds.

It should be emphasised that this is intended to be a local database, in a specific vehicle and not a global one. Indeed, habits and behaviours are individual and not the same for all individuals of our species.

It should also be noted that a given vehicle may be driven by several different drivers. It is then necessary to build up an individual database for each driver. Driver identification can be carried out using, for example, a camera, but also the driver's seat and mirror settings. It is also possible to identify the driver on the basis of driving style (speed relative to the speed limit on a given stretch of road), acceleration, speed of gear changes, use of brakes, etc.).

If a new driver boards the vehicle, the prediction system should operate in data acquisition mode only, the signalling of the driver's intentions should be switched off.

Information about the driver's anticipated intentions can be communicated to other road users. This can be done by using the vehicle's lights, e.g. if the driver is very likely to brake then you can switch on the STOP lights before the pedal is pressed giving the driver behind you more time to react. Similarly, if it is anticipated that a driver will be changing lanes, overtaking or turning, we can turn on the turn signals in advance.

Autonomous vehicles will soon be on the roads. The biggest threat to them will be vehicles driven by humans. If you can predict what the driver will do then you can send this information to autonomous vehicles nearby giving them a better chance of avoiding a collision.

Information about the anticipated manoeuvre should be sent together with the probability that the manoeuvre will be executed. The probability is determined by a statistical analysis of the database assigned to the manoeuvre and the driver.

### Key advantages and features of the present invention

Installing sensors in or near the steering wheel to detect the position of hands and fingers on the steering wheel.

Installing sensors in or near the pedals to detect the position of the foot relative to the pedal.

The aforementioned sensors can be, for example, capacitive sensors, pressure sensors or cameras.

Installing motion sensors in the vehicle: accelerometers and gyroscopes to determine what manoeuvre has been carried out

Installing location (navigation) systems such as GPS, Glonass, Galileo or Beidou on the vehicle to confirm the manoeuvre.

Creation of a local database where manoeuvres are assigned data from sensors in the steering wheel and pedals preceding the manoeuvre by a few seconds (e.g. 3 seconds) and from the manoeuvre itself.

Statistical analysis of the database for each individual manoeuvre to determine whether there is a correlation between a specific manoeuvre and the data from the steering wheel and pedal sensors.

If such a correlation exists, it is expedient to calculate with what probability it will be this manoeuvre and not another.

Identifying the position of hands on the steering wheel or feet over the pedals at which the manoeuvre is likely to be performed.

Creation of a database of the positions of hands on the steering wheel and feet over the pedals, to which statistically related manoeuvres should be assigned.

If the hands or feet are in a position identified in this base as correlated with a given manoeuvre, warn other drivers by using the stop lamps or turn signals before the manoeuvre starts.

If the vehicle is equipped to communicate with other vehicles, send information about the anticipated manoeuvre together with the probability with which the manoeuvre is likely to occur.

In particular, notification may occur when the probability value of the manoeuvre is greater than the threshold specified by the car manufacturer or the driver. The threshold specified by the car manufacturer or the driver can be for instance 40%, 50%, 60%, 70%, 80%, or 90%.

## Claims

1. A method for predicting drivers' behaviour on the road based on their habits, which includes:
(a) identification of the driver;
(b) collecting information on the position of the hand and individual fingers on the steering wheel, especially before and during the manoeuvre;
(c) collecting information on the position of the feet over or on the pedals, especially before and during the manoeuvre;
(d) collecting information on vehicle movements;
(e) creation of a local database for a given driver containing data on the position of hands on the steering wheel, the position of feet over or on the pedals and the manoeuvre performed simultaneously and/or within a few seconds;
(f) determination of the correlation between the position of the hands on the steering wheel, the position of the feet over or on the pedals and the manoeuvre performed simultaneously and/or within a few seconds;
(g) if the above correlation exists calculate the probability of the said manoeuvre; wherein
- in step (a) the driver is positively identified by camera and/or driver's seat settings and/or mirror settings and/or by driving style, acceleration, speed of gear changes, use of brake and/or clutch, etc;
- steps (b), (c) and (d) are performed simultaneously;
- steps (b) and (c) are preferably carried out using capacitive sensors, pressure sensors or cameras;
- step (d) is preferably carried out using motion sensors such as accelerometers and gyroscopes to determine what manoeuvre has been carried out and location systems such as GPS, Glonass, Galileo or Beidou to confirm the manoeuvre;
- steps (f) and (g) are carried out using statistical analysis.

2. The method according to claim. 1, **characterised in that** steps (e), (f) and (g) are implemented using a neural network.

3. A system for predicting drivers' behaviour on the road based on their habits, which includes:
- elements identifying the driver;
- elements that collect information about the position of the hand and individual fingers on the steering wheel, especially before and during a manoeuvre;
- elements that collect information about the position of the feet over or on the pedals, especially before and during a manoeuvre;
- elements collecting information about the movement of the vehicle;
- elements that form a local database for a given driver containing data on the position of the hands on the steering wheel, the position of the feet over or on the pedals and the manoeuvre performed simultaneously and/or within a few seconds;
- elements establishing the correlation between the position of the hands on the steering wheel, the position of the feet on the pedals or over the pedals and the manoeuvre to be executed simultaneously and/or within a few seconds and, if such a correlation exists, calculating the probability of execution of said manoeuvre;
- elements that communicate in advance to other road users the driver's intention to perform a listed manoeuvre for a correlation with a probability higher than the threshold specified by the car manufacturer or the driver; wherein
- driver-identifying features preferably include cameras and/or driver's seat settings and/or mirror settings and/or driving style, acceleration, speed of gear changes, use of brake and/or clutch, etc;
- elements that collect information about the position of the hand and individual fingers on the steering wheel, preferably including capacitive sensors, pressure sensors or cameras;
- elements that collect information about the position of the feet over or on the pedals, preferably including capacitive sensors, pressure sensors or cameras;
- elements that collect information about the movement of the vehicle preferably include movement sensors such as accelerometers and gyros to determine what manoeuvre has been carried out and location systems such as GPS, Glonass, Galileo or Beidou to confirm the manoeuvre.

4. The system according to claim 3, **characterised in that** the elements forming a local database for a given driver and the elements determining the correlation between the position of the hands on the steering wheel, the position of the feet over or on the pedals and the manoeuvre to be executed simultaneously and/or within a few seconds and, if such a correlation exists, calculating the probability of execution of said manoeuvre are elements of a neural network.

5. The system according to claim 3 or 4, **characterised in that** the elements communicating in advance to other road users the driver's intention to execute said manoeuvre for a correlation probability higher than the threshold specified by the car manufacturer or the driver include vehicle lights, such as brake lights, direction indicators or hazard warning lights, and vehicle-to-vehicle communication systems, such as communication by means of a cellular network, WIFI connection, Bluetooth or optical communication.
